# EUROPEAN PATENT APPLICATION

(11) **EP 1 643 714 A1**
(43) Date of publication of application: **05.04.2006**
(21) Application number: 05018946.3
(22) Date of filing: 31.08.2005
(51) Int. Cl.: H04L 29/06, H04L 12/28

(54) **Access point that provides a symmetric encryption key to an authenticated wireless station**

(30) Priority: 30.09.2004 US 955309
(71) Applicant: Hewlett-Packard Development Company, L.P., Houston, TX 77070 (US)
(72) Inventor: Johnson, Bruce, Eagle Idaho 83616 (US)
(74) Representative: Schoppe, Fritz

(57) **Abstract**

An access point (22) comprises a wireless transceiver (34, 48) and host logic (30) coupled to the wireless transceiver (34, 48). The host logic (30) is adapted to provide access by a wireless station (24) to a wired network (23). Through the wireless transceiver (34, 48), the host logic (30) wirelessly provides a symmetric encryption key to the wireless station (24) using asymmetric encryption.

## Description

### BACKGROUND

Wireless networks generally comprise one or more "access points" to which one or more wireless devices (also termed wireless "stations") can wirelessly communicate. The access points and the wireless stations have antennas by which the access points and devices can wirelessly communicate with one another. Each access point typically also has a wired connection to network cabling (e.g., CAT-5 cabling) and thus to various equipment such as servers, storage device, and printers. Wireless networks can be configured for encrypted or unencrypted communications. If configured for encrypted communications, a lengthy, seemingly arbitrary encryption key is programmed into the access points and the wireless stations. Configuring a wireless station for encrypted communications on a wireless network can be cumbersome to the user of the wireless station.

### BRIEF SUMMARY

In accordance with at least some embodiments, an access point comprises a wireless transceiver and host logic coupled to the wireless transceiver. The host logic is adapted to provide access by a wireless station to a wired network. Through the wireless transceiver, the host logic wirelessly provides a symmetric encryption key to the wireless station using asymmetric encryption.

### BRIEF DESCRIPTION OF THE DRAWINGS

For a detailed description of exemplary embodiments of the invention, reference will now be made to the accompanying drawings in which:

Figure 1 shows an exemplary embodiment of a wireless network comprising one or more access points and one or more wireless stations;

Figure 2 shows an exemplary embodiment of a wireless station;

Figure 3 shows an exemplary embodiment of an access point; and

Figure 4 shows an exemplary method of providing a wireless station with an encryption key.

### NOTATION AND NOMENCLATURE

Certain terms are used throughout the following description and claims to refer to particular system components. As one skilled in the art will appreciate, computer companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...." Also, the term "couple" or "couples" is intended to mean either an indirect or direct electrical connection. Thus, if a first device couples to a second device, that connection may be through a direct electrical connection, or through an indirect electrical connection via other devices and connections.

### DETAILED DESCRIPTION

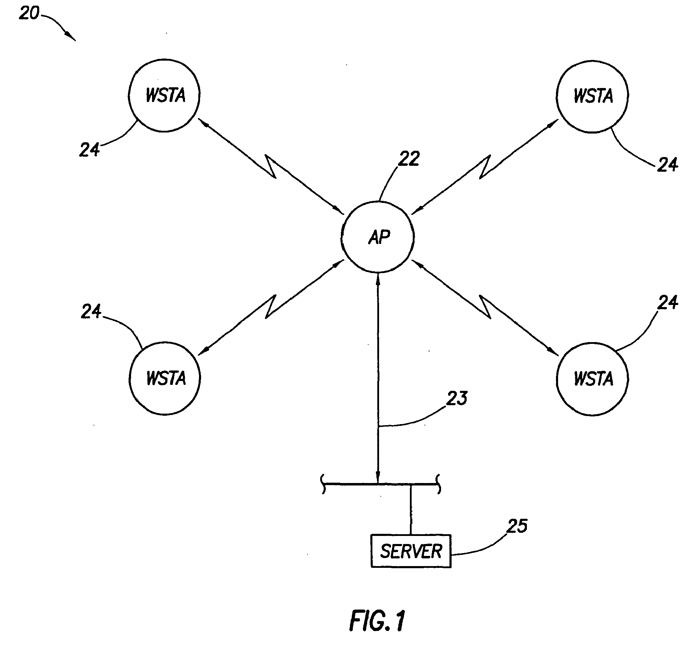

Referring to Figure 1, a wireless network 20 comprises one or more access points 22 (although for simplicity only one is shown) to which one or more wireless stations ("WSTAs") 24 wirelessly communicate. Each WSTA 24 comprises a computer such as a desktop computer, portable computer, including notebooks, handheld computers, and personal data assistants ("PDAs"), or any other type of device that can wirelessly access a wireless network. The access points ("AP") 22 have a wired connection 23 to a wired network that may include servers 25 and other types of devices such as storage devices and printers (not specifically shown). Via the AP 22, a WSTA 24 can access the various wired network devices (e.g., server 25). The wireless network may be implemented according to any desired standard or customized protocol. An example of a suitable standard comprises one or more of the applicable IEEE 802.11 wireless standards.

The AP 22 and WSTAs 24 are capable of encrypted or unencrypted communications with each another. The encryption may be symmetrical or asymmetrical. For symmetrical encryption, each device is bestowed with the same encryption key to encrypt and decrypt a message. Two devices (e.g., an AP 22 and a WSTA 24) may employ symmetric encryption for messages transmitted back and forth between each other and each such device uses the same encryption/decryption key as the other device. An example of a symmetric encryption is the Wired Equivalent Privacy ("WEP") protocol. In some embodiments, the symmetric encryption protocol is the protocol specified in the wireless standard that is implemented. For example, the IEEE 802.11 standards specify the use of the WEP protocol and thus, if 802.11 is used for the wireless standard in the wireless network 20, then the WEP protocol is used for the symmetric encryption protocol.

Symmetric encryption differs from asymmetric encryption, which uses two keys-one key to encrypt a message and another key to decrypt the message. An example of asymmetric encryption is a public key/private key protocol such as the Secure Socket Layer ("SSL") or Pretty Good Privacy ("PGP") protocols. In a public key/private key encryption protocol, a public key is known or otherwise made available to everyone and a private key is known only to the recipient of the message. When a WSTA 24 sends an asymmetrically encrypted message to the AP 22, the WSTA 24 uses a public key associated with the AP 22 to encrypt the message. The AP 22 then uses a private key to decrypt the message it. In a public key/private key protocol, the public and private keys are mathematically related to each other in such a way that only the public key can be used to encrypt messages and only the corresponding private key can be used to decrypt the messages.

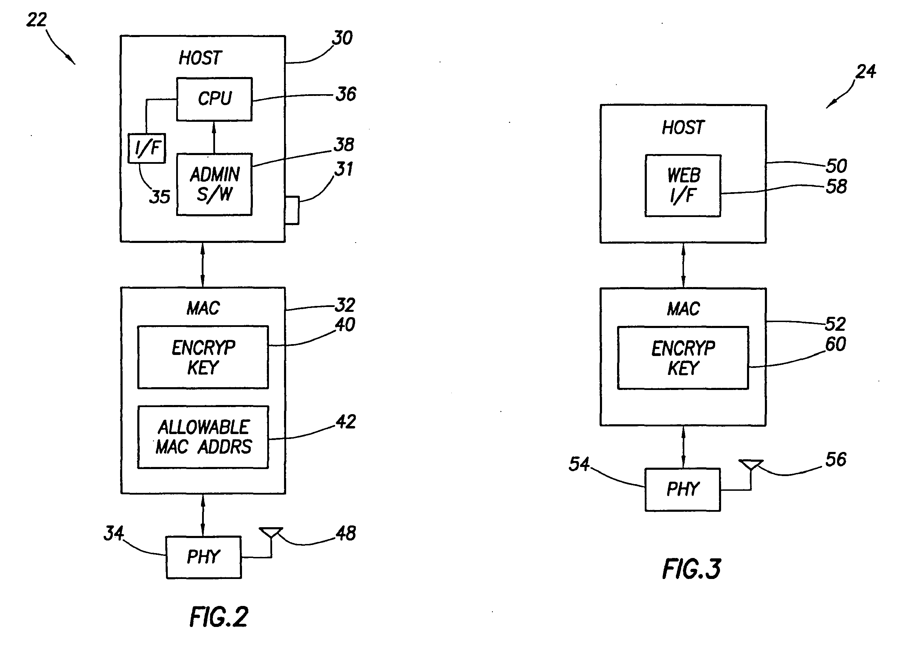

Figure 2 shows an exemplary embodiment of an access point 22. As shown, the access point 22 comprises a host 30, a medium access control module ("MAC") 32 and a physical module ("PHY") 34. The PHY 34 comprises a wireless transceiver, such as a radio transceiver, and includes one or more antennas 48 connected thereto thereby enabling wireless communications to other wireless-enabled devices. The MAC 32 manages and maintains communications between access points 22 and WSTAs 24 by coordinating access to a shared radio channel and using protocols that enhance communications over the wireless medium. The host 30 uses the services offered by the MAC 32 to effectuate communications across the wireless medium. The host is also connected to a wired network interface 35. Using this interface 35, the host 30 in the access point 22 also provides access to wired network equipment such as the servers, printers, and storage devices noted above. The host provides packet forwarding or routing mechanisms to connect the separate wired and wireless networks.

Referring still to Figure 2, the access point 22 comprises a central processing unit ("CPU") 36 that may be implemented as part of the host 30. The CPU 36 is adapted to execute a variety of executable code such as the administrator software 38. The administrator software 38 operates as a web-based application and generally manages access point 22 and enables access point 22 to be remotely configured. The access point can be configured via a device such as a computer connected by a cable to a port 31 associated with the host 30. In other embodiments, the access point 22 is configured by way of a properly authorized WSTA 24 via wireless communications between the access point and WSTA. An authorized WSTA 24 is a WSTA for which the symmetric encryption keys match the symmetric encryption keys stored in the access point 22, and, if implemented, the MAC restrictions (discussed below) of the access point permit communications by the WSTA.

The administration software 38 is executed by the CPU 36 to permit the access point 22 to be configured as desired. Examples of configuration activities include loading or changing the encryption key(s) in the access point and programming the access point with one or more MAC addresses of WSTAs 24 that are permitted to access to the wired network via the access point.

The MAC 32 in the access point 22 includes one or more symmetric encryption keys 40 that may be implemented according to the WEP protocol or other symmetric encryption protocol. The MAC may also include storage for one or more allowable MAC addresses 42. The addresses 42 correspond to WSTAs 24 that are permitted to access the wireless network 20. The allowable MAC addresses may be stored in the MAC 32 of the access point 22 via the administration software 38.

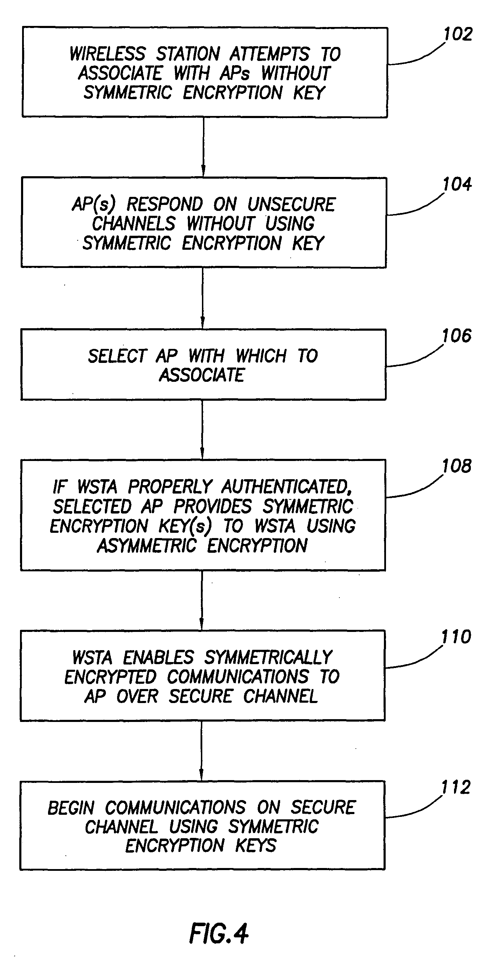

Figure 3 shows an exemplary embodiment of a WSTA 24. The WSTA 24 comprises a host 50, a MAC 52, and a PHY 54 coupled together as shown. An antenna 56 connects to the PHY 54. The HOST 50 may represent at least a portion of the logic comprising a notebook computer or other type of wireless-enabled, portable electronics device as noted above. As such, the host 50 may comprise a CPU, memory, an operating system, and various software applications. The host 50 may comprise a web interface 58 that permits the WSTA 24 to access and run the administration software 38. The MAC 52 of the WSTA 24 includes storage 60 for one or more encryption keys.

The access point 22 and WSTAs 24 can communicate with each other via any of a plurality of wireless communication channels. The IEEE 802.11 b standard, for example, specifies 11 channels in the spectrum from 2400 MHz to 2483.5 MHz. As desired, communications across an individual channel can be encrypted or non-encrypted. In this disclosure, a channel on which communications are encrypted using a symmetric encryption protocol is referred to as a "secure" channel. On a secure channel, communicating devices such as an AP 22 and a WSTA 24 each have a symmetric encryption key. Each device uses its symmetric encryption key to encrypt and decrypt communication packets that are transmitted to and received from another device. Some channels may be secure while other channels are not secure. In accordance with the exemplary embodiments of the invention, at least one channel associated with an AP 22 is not secure. In some embodiments, more than one channel is not secure. Asymmetric encryption may also be used and may be used on both secure and unsecure channels. An exemplary use of asymmetric encryption is to provide a WSTA 24 with a symmetric encryption key on an unsecure as will be explained below.

For a WSTA 24 to access a network service, such as any services provided by server 25, the WSTA 24 and the AP 22, through which the WSTA gains access to the network service, communicate across a secure channel (i.e., a channel employing symmetric encryption). Permitting access to network services on secure channels reduces the probability that an unauthorized entity can access the wired network or wirelessly receive data associated with the network. A WSTA 24 is able to communicate on a secure channel with an AP 22 if the WSTA 24 is programmed with the same symmetric encryption key used by the AP. A network administrator, or other suitable person, programs the AP 22 with a desired symmetric encryption key. Programming the symmetric encryption key into the AP 22 may be performed by executing the administration software 38 by an input/output device connected to the AP 22. For example, a network administrator may connect a laptop computer to a port 31 on the AP and cause the administration software 38 to be run via the port 31. At least one feature of the administration software 38 is the ability to configure one or more symmetric encryption keys into the AP 22.

A WSTA 24, however, may not be programmed with the correct symmetric encryption key or may not be programmed with any symmetric encryption keys. The exemplary embodiments of the invention facilitate configuring the WSTA with the correct symmetric encryption key(s). The following discussion describes this process.

When a WSTA 24 first attempts to associate with the wireless network 20, the WSTA may not contain a symmetric encryption key that is suitable for use on the wireless network 20. Figure 4 shows a method 100 by which an AP 22 provides one or more symmetric encryption keys to the WSTA 24 to permit the WSTA 24 access to the wireless network over secured channel. In some embodiments, prior to performing method 100, the WSTA 24 or user of the WSTA 24 is authorized for access to the wireless network 20. Obtaining authorization may comprise any suitable technique. For example, a user of a WSTA may be requested to provide a credit card number which, when validated, authorizes the user to use the wireless network 20. This type of authorization scheme may be suitable, for example, in a public establishment which, for a fee, provides access to a wireless network. Alternatively, the user of the WSTA 24 may be requested to enter a correct username and password which is authenticated by the wireless network 20. The access point 22 performs or causes to be performed the WSTA authorization.

Once authorization is obtained, the WSTA 24 needs the correct symmetric encryption key to communicate with the wireless network via a secure channel. In block 102 of method 100, the WSTA attempts to associate with an AP 22. This act is performed without the use of a correct symmetric encryption key (i.e., a symmetric encryption key that is also used by the AP). The association process may be in accordance with any of a variety of association techniques. The WSTA, for example, may transmit a message that requests any APs to respond if present. The request may contain the MAC address of the WSTA. If an AP is within communication range of the WSTA 24, the AP will reply (block 104) to the attempted assoc iation with the MAC address of the AP over an unsecure channel. If an AP has more than one unsecure channel, that AP may respond over any or all of such unsecure channels. At this point, APs will generally not respond to an attempted association via a secure channel. The WSTA 24 may receive a response message if an AP is nearby or more than one response messages if more than one AP is nearby. The list of APs that respond are shown on a display coupled to the WSTA. If only one AP responds, the user of the WSTA 24 selects that one AP with which to associate (block 106). If more than one AP responds, the user may select any desired AP on the list with which to associate.

If the WSTA 24 has been properly authorized for access to the wireless network over a secure channel, at block 108 the AP transmits a suitable encryption key to the authorized WSTA over the unsecure channel. The security of the symmetric encryption key is assured by encrypting the symmetric encryption key using an asymmetric encryption protocol. If desired, more than one encryption key may be transmitted to the WSTA 24. At block 110, the WSTA enables symmetrically encrypted communications to the AP 22 using the symmetric encryption key(s) provided by the AP. The WSTA and AP may then begin symmetrically encrypted communications (block 112) over a secure channel using the symmetric encryption key(s). Beginning secure communications may involve the WSTA initiating a new round of discovery of APs 22 as described above, this time using the symmetric encryption key(s). An AP that has the same symmetric encryption key (which presumably will at least be the AP that provided the WSTA with the encryption key in block 108) will respond to the WSTA's attempts to associate.

From the standpoint of the WSTA 24, an AP 22 having both secure and unsecure channels will logically appear as two separate APs; one AP for secure communications and another AP for unsecure communications. When communicating over the unsecured channel, the AP 22 does not permit a WSTA 24 to communicate over the wired network. The unsecured channel permits communication with the access point 22 for the purpose of configuring the secure channel and not for providing access to one or more other devices and services available on the network as noted above. In other embodiments, physically separate APs may be provided with some APs being configured for only unsecure communications for the purpose of providing authorized WSTAs 24 with encryption keys for communication on secure channels to other APs.

In at least some embodiments, each AP may be programmed with a list of allowable WSTA MAC addresses 42. A network administrator, for example, may program a MAC address of an authorized WSTA 24 into the allowable addresses storage 42 of an AP 22. The AP 22 will not permit a WSTA 24, whose MAC address is provided to the AP during the discovery process, with access to the wireless network 20 if the WSTA's MAC address does not match an entry in the allowable addresses 42. In some embodiments, the AP 22 will not provide an WSTA 24 with the symmetric encryption if the WSTA's MAC address does not match an address in allowable addresses 42, even if the WSTA is authenticated.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

## Claims

1. An access point (22), comprising:
a wireless transceiver (34, 48); and
host logic (30) coupled to said wireless transceiver (34, 48) and adapted to provide access by a wireless station (24) to a wired network (23), wherein through the wireless transceiver (34, 48) the host logic (30) wirelessly provides a symmetric encryption key to the wireless station (24) using asymmetric encryption.

2. The access point (22) of claim 1 wherein after the host logic (30) communicates with the wireless station (24) using the symmetric encryption key.

3. The access point (22) of claim 1 wherein the host logic (30) provides the symmetric encryption key to the wireless station (24) after the wireless station (24) is authenticated for access to the wired network (23).

4. The access point (22) of claim 1 wherein the host logic (30) replies to attempts to associate with the wireless station (24) over a channel that is not configured to use symmetric encryption if the wireless station (24) is not using symmetric encryption.

5. The access point (22) of claim 1 wherein the host logic (30) replies to attempts to associate over a channel that is configured to use symmetrically encrypted communications if the wireless station (24) is using the symmetric encryption.

6. The access point (22) of claim 1 wherein the asymmetric encryption comprises a public key/private key encryption protocol.

7. A method, comprising:
wirelessly transmitting (108) an asymmetrically encrypted, symmetric encryption key from an access point (22) to a wireless station (24) if the wireless station (24) is authenticated;
programming (110) the wireless station (24) with the symmetric encryption key; and
establishing (112) wireless communications between the wireless station (24) and the access point (22) using said symmetric encryption key.

8. The method of claim 7 further comprising comparing an address provided by the wireless station (24) to a list of allowable addresses associated with the access point (22) and wirelessly transmitting the symmetric encryption key to the wireless station (24) only if the address provided by the wireless station (24) matches an address in the list of allowable addresses.

9. The method of claim 7 further comprising authenticating the wireless device (24) before wirelessly transmitting the asymmetrically encrypted, symmetric encryption key to the wireless device (24).

10. The method of claim 7 further comprising asymmetrically encrypting the symmetric encryption key.
